# EUROPEAN PATENT APPLICATION

(11) **EP 1 204 241 A1**
(43) Date of publication of application: **08.05.2002**
(21) Application number: 99937003.4
(22) Date of filing: 09.08.1999
(51) Int. Cl.: H04L 12/24, H04M 3/22, H04Q 3/42, H04Q 3/545

(54) **PACKAGE CONTROL DEVICE AND METHOD**

(71) Applicant: FUJITSU LIMITED, Kawasaki-shi, Kanagawa 211-8588 (JP)
(72) Inventor: IIJIMA, Norio, Fujitsu Limited, Kawasaki-shi, Kanagawa 211-8588 (JP)
(74) Representative: HOFFMANN - EITLE
(86) International application number: JP9904316
(87) International publication number: WO0111826

(57) **Abstract**

A change in the state of a package in an NE is recognized and operation setting necessary for the package is performed automatically and efficiently. A package information obtaining section (11) obtains information regarding a package and generates a package information table (T1) at the time of starting. An operational information obtaining section (12) obtains information regarding the package regularly and generates an operational information table (T2) at the time of operating network elements (20-1) through (20-n). A change information detecting section (13) detects change information by comparing the package information table (T1) and the operational information table (T2). A package operation setting performing section (14) performs operation setting on the package on the basis of the change information.

## Description

### TECHNICAL FIELD

This invention relates to a unit and method for controlling packages and, more particularly, to a package control unit and package control method for controlling packages mounted in network elements.

### BACKGROUND ART

SDH (Synchronous Digital Hierarchy) defines interfaces for multiplexing various high-speed services and existing low-speed services effectively and is standardized by ITU-T. SDH is under development as the base of next generation telecommunication.

Moreover, various pieces of information, such as operational information, are set for packages in network elements (NE) which form SDH networks. Various communication services are provided on the basis of these pieces of information.

Conventionally, the setting of these pieces of information on NEs has been performed individually by operators in front of NE racks through terminals and the like when new packages are mounted due to, for example, the increase of NEs. This is inefficient and needs much time and many operators.

In recent years communication networks have become larger and more complex. A demand for more advanced technologies for network operation and maintenance applicable to NEs installed in a wide area has risen.

For example, Japanese Patent Laid-Open Publication No.Hei5-236068 discloses a technique by which parameters for a package are automatically initialized. In addition, Japanese Patent Laid-Open Publication No.Hei4-24853 discloses a technique by which data is stored in a nonvolatile memory and is automatically transferred from the nonvolatile memory to a package at the time of the package being mounted. As a result, data setting will be performed on a package.

With the conventional techniques described above, however, only static information, such as parameters at the time of initialization or data stored in a nonvolatile memory, is automatically set. Therefore, appropriate information setting corresponding to a change in the state at the time of operation cannot be performed.

Moreover, information regarding links between NEs has conventionally not been set, so line setting on linked elements cannot be automated.

In addition, measures have not been taken against the mismounting of a package, so erroneous automatic setting can be performed at the time of mismounting.

### DISCLOSURE OF INVENTION

The present invention was made under the background circumstances as described above. An object of the present invention is to provide a unit for controlling packages that recognizes a change in the state of a package in an NE and performs operation setting necessary for the package automatically and efficiently.

Another object of the present invention is to provide a method for controlling packages that recognizes a change in the state of a package in an NE and performs operation setting necessary for the package automatically and efficiently.

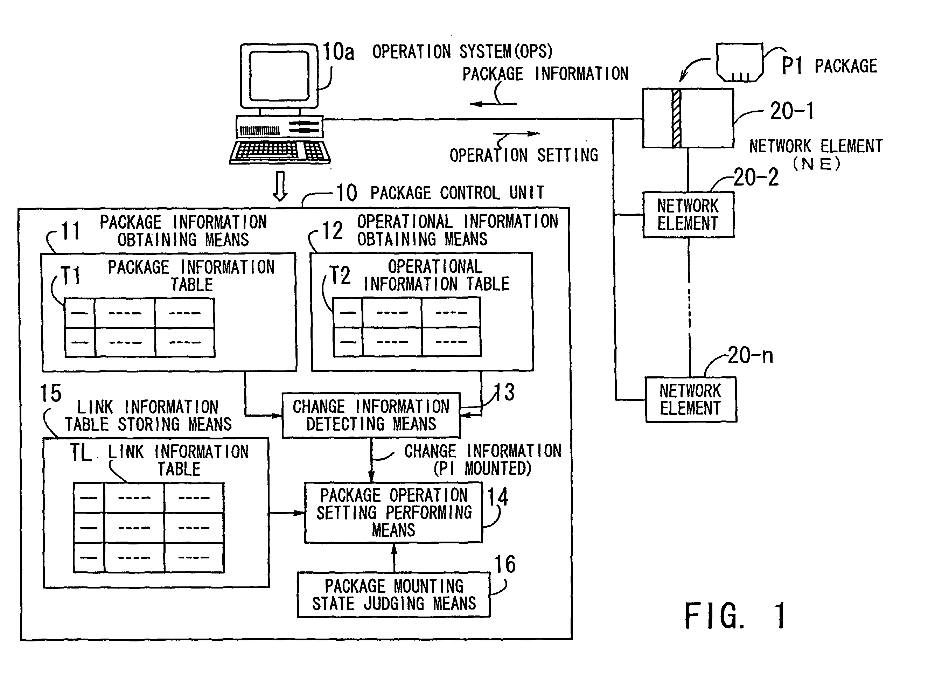

In order to solve the above problem, a package control unit 10 for controlling a package mounted in a network element according to the present invention, shown in Fig. 1, comprising package information obtaining means 11 for obtaining information regarding the package and generating a package information table T1 at the time of starting, operational information obtaining means 12 for obtaining information regarding the package regularly and generating an operational information table T2 at the time of operating network elements 20-1 through 20-n, change information detecting means 13 for detecting change information by comparing the package information table T1 and operational information table T2, and package operation setting performing means 14 for performing operation setting on the package on the basis of the change information is provided.

The package information obtaining means 11 obtains information regarding a package and generates a package information table T1 at the time of starting. The operational information obtaining means 12 obtains information regarding a package regularly and generates an operational information table T2 at the time of operating the network elements 20-1 through 20-n. The change information detecting means 13 detects change information by comparing a package information table T1 and operational information table T2. The package operation setting performing means 14 performs operation setting on a package on the basis of change information.

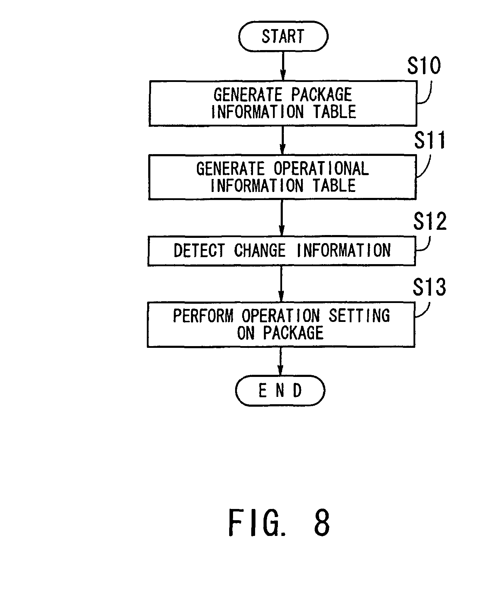

Furthermore, a package control method for controlling a package mounted in a network element, shown in Fig. 8, comprising the steps of obtaining information regarding the package and generating a package information table at the time of starting, obtaining information regarding the package regularly and generating an operational information table at the time of operating the network element, detecting change information by comparing the package information table and the operational information table, and performing operation setting on the package on the basis of the change information is provided.

In this case, operation setting on a package is performed on the basis of change information detected by comparing a package information table and operational information table.

The above and other objects, features, and advantages of the present invention will become apparent from the following description when taken in conjunction with the accompanying drawings which illustrate preferred embodiments of the present invention by way of example.

### BRIEF DESCRIPTION OF DRAWINGS

Fig. 1 is a view for describing the principles underlying a package control unit according to the present invention.
Fig. 2 is a view showing an example of the structure of a system information table.
Fig. 3 is a view showing an example of the structure of a package information table.
Fig. 4 is a view showing an example of the structure of a link information table.
Fig. 5 is a view showing paths from an NE1 to an NEn.
Fig. 6 is a view showing a package information table and operational information table.
Fig. 7 is a view showing the sequence of operation performed in the case of establishing a path.
Fig. 8 is a flow chart showing the operational procedure of a package control method according to the present invention.

### BEST MODE FOR CARRYING OUT THE INVENTION

An embodiment of the present invention will now be described with reference to the drawings. Fig. 1 is a view for describing the principles underlying a package control unit according to the present invention. A package control unit 10 is located in an operation system (OPS) 10a which operates and maintains network elements (NE) 20-1 through 20-n and controls packages mounted in the NEs 20-1 through 20-n.

The NEs 20-1 through 20-n are interconnected in any topology (in a linear topology, in this example). The OPS 10a at a remote location can operate and maintain them.

The package information obtaining means 11 obtains information regarding the packages, which are mounted in the NEs 20-1 through 20-n, according to NEs and generates a package information table T1 described later at the time of starting the OPS 10a.

Practically, the package information obtaining means 11 first obtains information regarding systems in the NEs 20-1 through 20-n and generates a system information table at the time of starting the OPS 10a. Then the package information obtaining means 11 generates a package information table T1 on the basis of this system information table. The details will be described later.

The operational information obtaining means 12 regularly obtains information regarding the packages according to NEs (polling) and generates an operational information table T2 described later at the time of operating the NEs 20-1 through 20-n.

The change information detecting means 13 detects change information by comparing the package information table T1 and operational information table T2. For example, it is assumed that a new package P1 is mounted in the NE 20-1 after starting the OPS 10a and beginning to operate the NEs 20-1 through 20-n.

In this case, the package information table T1 generated at the time of starting the OPS 10a (at the time of starting the NEs 20-1 through 20-n) indicates that the package P1 is not mounted. The operational information table T2 generated by polling after beginning to operate the NEs 20-1 through 20-n indicates that the package P1 is mounted. The change information detecting means 13 detects such real-time change information being the difference between the package information at the time of starting and at the time of operating.

The package operation setting performing means 14 automatically performs operation setting on a package on the basis of the change information detected. For example, the package operation setting performing means 14 performs setting for activation control to utilize the package P1 by setting its initial values etc. Moreover, the package operation setting performing means 14 performs setting for data communication channel (DCC) control, being a function for transferring information regarding supervisory control between, for example, NEs, on the package P1.

In addition, the package operation setting performing means 14 performs line setting (path setting) on a package newly inserted as operation setting on the basis of a link information table TL stored in link information table storing means 15.

The link information table storing means 15 generates and stores a link information table TL described later on the basis of link information regarding the NEs 20-1 through 20-n input by an operator of the OPS 10a.

In this case, the package operation setting performing means 14 has already received change information that the package P1 was newly mounted, so the package operation setting performing means 14 automatically performs line setting on all of the NEs relating to paths which will influence the package P1 on the basis of the link information table TL.

The package operation setting performing means 14 can choose whether or not it performs various kinds of operation setting described above. This selection control function will eliminate unnecessary operation setting.

For example, when a package is mounted and removed to evaluate an NE, an operator can set the OPS 10a so that operation setting will not start. This can prevent unnecessary operation setting.

Package mounting state judging means 16 judges whether the package P1 is mounted normally or erroneously, and displays its judgment to an operator via the human machine interface (HMI) of the OPS 10a. This can prevent operation setting on a package mismounted.

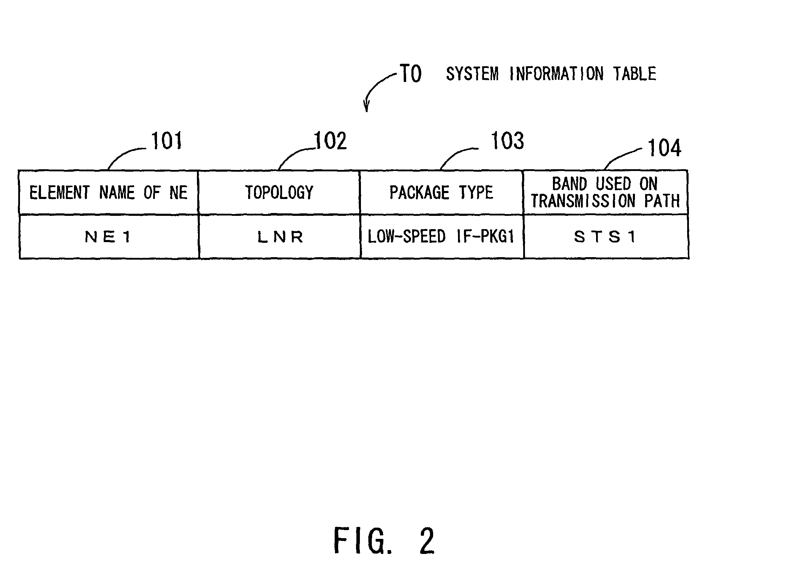

Now, the concrete structure and operation of the package control unit 10 according to the present invention will be described. Fig. 2 is a view showing an example of the structure of a system information table. To simplify descriptions, each of the tables below shows only information regarding one package mounted in one element.

As stated above, a package information table T1 is generated on the basis of a system information table T0. The package information obtaining means 11 first obtains information regarding systems in the NEs 20-1 through 20-n and generates a system information table T0 at the time of starting the OPS 10a.

Items included in a system information table T0 are Element Name of NE 101, Topology 102, Package Type 103, and Band Used on Transmission Path 104.

Element Name of NE 101 is the name of an element over which the OPS 10a exerts supervisory control. Topology 102 is a way of interconnecting a plurality of NEs, such as a ring or linear topology. Package Type 103 indicates, for example, whether a package is for a low or high signal speed. Band Used on Transmission Path 104 is a band used on a transmission path relating to the package.

For example, Element Name of NE 101 is NE1, Topology 102 is LNR (a linear topology), Package Type 103 is low-speed IF-PKG1 (which means a low-speed interface package), and Band Used on Transmission Path 104 is STS-1 (synchronous transport signal-1:51.84Mbps). A table with such contents will be generated for all of the NEs over which the OPS 10a exerts supervisory control.

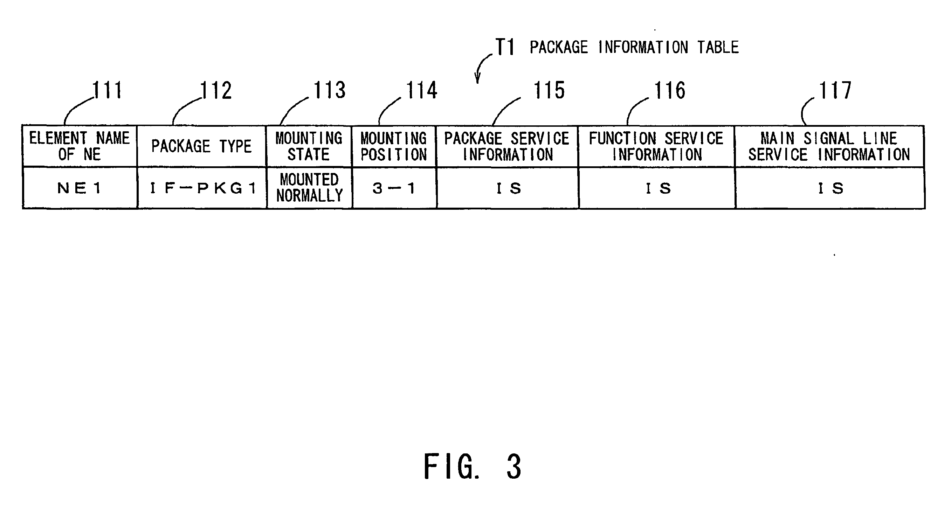

Now, a package information table T1 will be described. Fig. 3 is a view showing an example of the structure of a package information table T1. After generating a system information table T0, the package information obtaining means 11 obtains information regarding packages, which are mounted in the NEs 20-1 through 20-n, according to NEs and generates a package information table T1.

Items included in a package information table T1 are Element Name of NE 111, Package Type 112, Mounting State 113, Mounting Position 114, Package Service Information 115, Function Service Information 116, and Main Signal Line Service Information 117.

The contents of Element Name of NE 111 and Package Type 112 were obtained at the time of generating a system information table T0 and the other items will be obtained from the NEs as package information at the time of starting or logging on the NEs again.

Mounting State 113 indicates the mounting state of a package, that is to say, whether a package is mounted or not and, if a package is mounted, whether it is mounted normally or erroneously. Mounting Position 114 indicates a position where a package is mounted. Package Service Information 115 indicates whether a package is activated or not. Function Service Information 116 indicates whether a function, such as DCC, of a package has is being used or not. Main Signal Line Service Information 117 indicates whether a line for main signals is being used or not.

For example, Element Name of NE 111 is NE1, Package Type 112 is low-speed IF-PKG1, Mounting State 113 is "mounted normally," Mounting Position 114 is 3-1 (which means the leftmost slot on shelf #3), and Package Service Information 115, Function Service Information 116, and Main Signal Line Service Information 117 are IS (which means "in service"). When a package is not activated, Package Service Information 115 is OOS (which means "out of service"). When a function of a package has is not being used, Function Service Information 116 is OOS. When a line for main signals is not being used, Main Signal Line Service Information 117 is OOS. A table with such contents will be generated for all of the NEs over which the OPS 10a exerts supervisory control.

Each time operation setting of some kind is performed after a package information table T1 being generated, the contents of the package information table T1 will be updated.

On the other hand, an operational information table T2 is generated by polling package information while the NEs 20-1 through 20-n are being operated. Items included in an operational information table T2 are the same as those of a package information table T1, so descriptions of its structure will be omitted.

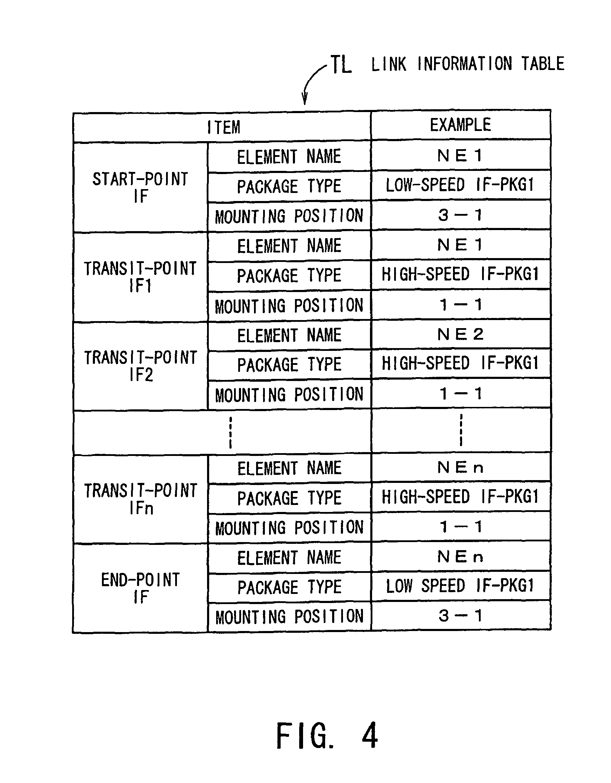

A link information table TL will now be described. Fig. 4 is a view showing an example of the structure of a link information table. The link information table storing means 15 generates a link information table TL on the basis of link information regarding the NEs 20-1 through 20-n input by an operator of the OPS 10a and stores it.

Items included in a link information table TL are Start-point IF, Transit-point IF1 through Transit-point IFn, and End-point IF each of which consists of Element Name, Package Type, and Mounting Position.

Start-point IF indicates information regarding a package being a start point for a path. Each of Transit-point IF1 through Transit-point IFn indicates information regarding a package being a transit point for a path. End-point IF indicates information regarding a package being an end point for a path.

For example, Element Name, Package Type, and Mounting Position under Start-point IF are NE1, low-speed IF-PKG1, and 3-1 respectively. Element Name, Package Type, and Mounting Position under Transit-point IF1 are NE1, high-speed IF-PKG1, and 1-1 (which means the leftmost slot on shelf #1) respectively.

Element Name, Package Type, and Mounting Position under Transit-point IF2 are NE2, high-speed IF-PKG1, and 1-1 respectively. Element Name, Package Type, and Mounting Position under Transit-point IFn are NEn, high-speed IF-PKG1, and 1-1 respectively. Element Name, Package Type, and Mounting Position under End-point IF are NEn, low-speed IF-PKG1, and 3-1 respectively.

A link information table TL includes information regarding a path which has already been established or which is to be established.

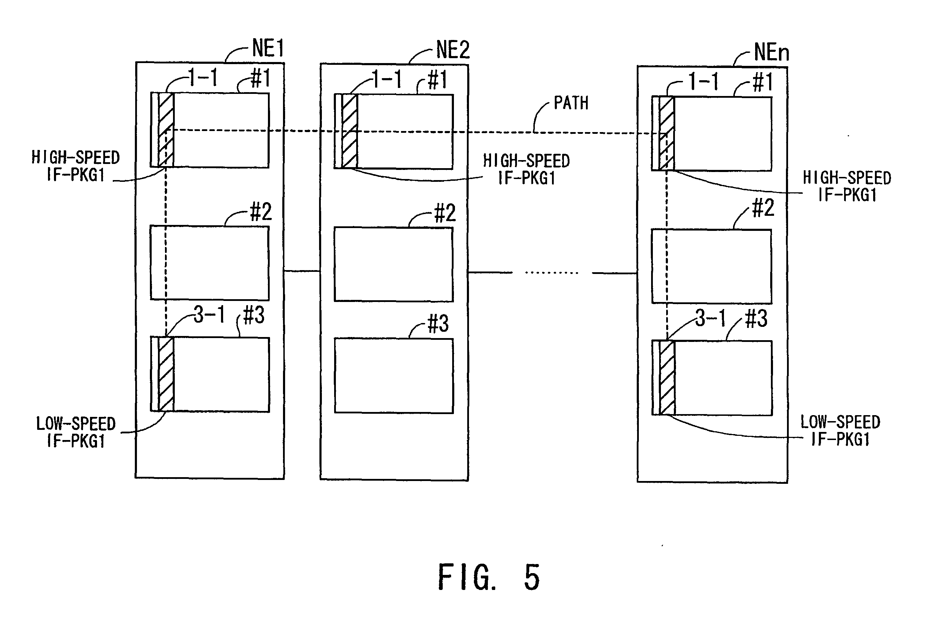

Fig. 5 is a view showing paths from the NE1 to the NEn. Fig. 5 illustrates the path shown in Fig. 4, being a link connecting the NE1 through NEn, by a diagram. Shelves #1 through #3 are located in the NE1 through NEn.

A high-speed package is mounted on shelf #1 and a low-speed package is mounted on shelf #3. A dotted line in Fig. 5 indicates the path given in the link information table TL shown in Fig. 4.

Now, operation performed in the case of performing line setting automatically will be described in detail. In Figs. 4 and 5 described above, it is assumed that a path from the NE2 to the NEn has already been established, and a case where a new path is established between the NE1 and NE2 will be described as an example.

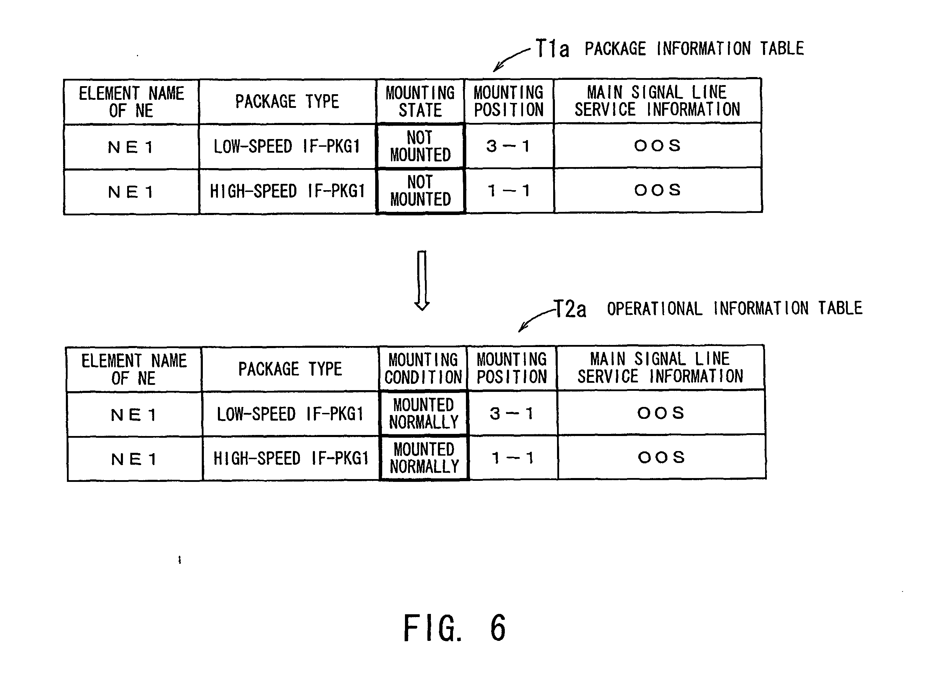

Fig. 6 is a view showing a package information table and operational information table. The package information table T1a shows that a low- and high-speed IF-PKG1 package are not mounted in the NE1 at the time of starting.

The operational information table T2a later shows that a low- and high-speed IF-PKG1 package were mounted normally at mounting positions 3-1 and 1-1 respectively.

In this state of things, the package operation setting performing means 14 will automatically perform line setting on the basis of the link information table TL (see Fig. 4) including information regarding a link to be established.

That is to say, a path is automatically established between the low-speed IF-PKG1 package mounted at mounting position 3-1 in the NE1 and the high-speed IF-PKG1 package mounted at mounting position 1-1 in the NE1.

In addition, a path is automatically established between the high-speed IF-PKG1 package mounted at mounting position 1-1 in the NE1 and a high-speed IF-PKG1 package mounted at mounting position 1-1 in the NE2.

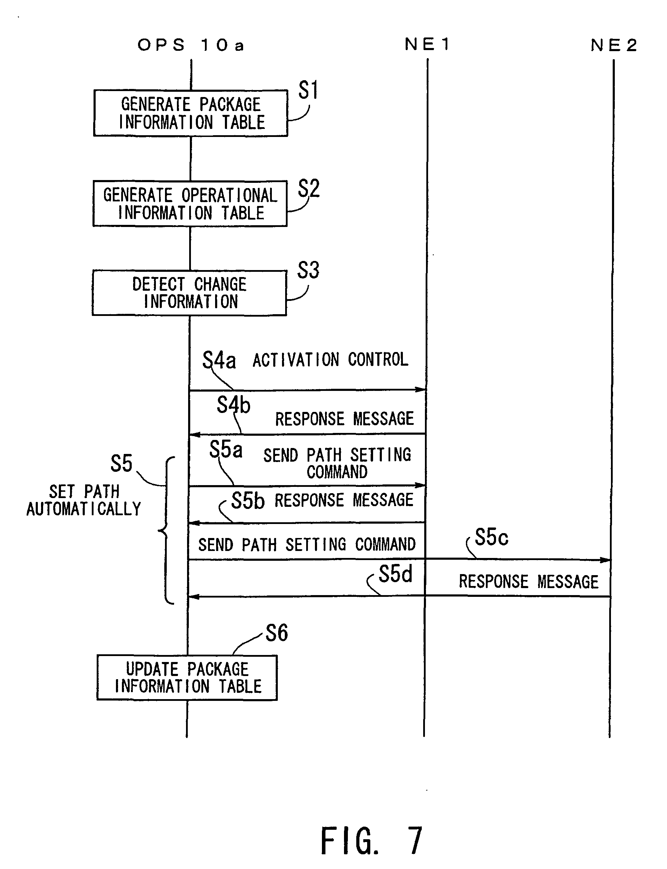

Fig. 7 is a view showing the sequence of operation performed in the case of establishing a path.

[S1] The package information obtaining means 11 obtains package information from the NE1 and generates the package information table T1a (which will keep the state in step S6 described later except at the time of starting and logging on the NEs again) at the time of starting or logging on the NEs again.

[S2] The operational information obtaining means 12 obtains package information from the NE1 by polling and generates the operational information table T2a.

[S3] The change information detecting means 13 detects change information by comparing the package information table T1a and operational information table T2a. In this case, the change information detecting means 13 detects that a low- and high-speed IF-PKG1 package were mounted normally at mounting positions 3-1 and 1-1 respectively (a change flag is ON).

[S4a] The package operation setting performing means 14 exerts activation control over the low- and high-speed IF-PKG1 package.

[S4b] The package operation setting performing means 14 receives response messages about the activation control from the low- and high-speed IF-PKG1 package.

[S5] The package operation setting performing means 14 refers to the link information table TL and automatically performs path setting on the NE1 and NE2 relating to a path which will influence these low- and high-speed IF-PKG1 packages.

[S5a] To be concrete, the package operation setting performing means 14 sends the low- and high-speed IF-PKG1 package in the NE1 a path setting command to establish a path between them.

[S5b] The package operation setting performing means 14 receives response messages from the low- and high-speed IF-PKG1 package in the NE1.

[S5c] The package operation setting performing means 14 sends a high-speed IF-PKG1 package in the NE2 a path setting command to establish a path between the high-speed IF-PKG1 package in the NE1 and the high-speed IF-PKG1 package in the NE2.

[S5d] The package operation setting performing means 14 receives a response message from the high-speed IF-PKG1 package in the NE2.

[S6] After the line setting, the change flag is set to OFF and the contents of the package information table T1a are updated. In this case, the Main Signal Line Service Information item in the package information table T1a will be changed to IS.

A method for controlling packages according to the present invention will now be described. Fig. 8 is a flow chart showing the operational procedure of a method for controlling packages according to the present invention.

[S10] At the time of starting, information regarding a package is obtained and a package information table is generated.

[S11] At the time of operating NEs, information regarding the package is obtained by polling and an operational information table is generated.

[S12] Change information is detected by comparing the package information table and operational information table.

[S13] Operation setting is performed on the package on the basis of the change information. At least one of the setting of activation control and the setting of supervisory control will be performed on the package as operation setting.

On the other hand, a link information table regarding links which connect NEs is generated and, on the basis of this link information table, line setting is automatically performed on all of the NEs relating to paths which will influence a package.

Moreover, whether a package is mismounted or not is judged and an operator will be informed of a judgment. In addition, selection control about whether to perform operation setting is performed.

As described above, the package control unit 10 and package control method according to the present invention perform operation setting on a package on the basis of change information detected by comparing a package information table and operational information table.

Conventionally, operators have set lines between NEs individually when, for example, an element or package is added. This can lead to missetting. In the present invention, tables including contents to be set are generated and the procedures and performance of setting are automated, so lines can be established, increased, or changed efficiently.

Furthermore, in the present invention, if a package is mismounted, an operator will be informed of it. As a result, mismounting can be detected early.

In addition, in the present invention, whether to perform automatic operation setting, such as establishing a path, can be chosen by the OPS 10a. Useless setting control therefore can be eliminated by turning automatic operation setting to OFF in the case of, for example, exchanging a package.

As has been described in the foregoing, the unit for controlling packages according to the present invention performs operation setting on a package on the basis of change information detected by comparing a package information table and operational information table. This enables to perform appropriate operation setting, which corresponds to a change in the state at the time of operation, on a package efficiently.

Furthermore, the method for controlling packages according to the present invention performs operation setting on a package on the basis of change information detected by comparing a package information table and operational information table. This enables to perform appropriate operation setting, which corresponds to a change in the state at the time of operation, on a package efficiently.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. A package control unit for controlling a package mounted in a network element, comprising:
a package information obtaining section for obtaining information regarding the package and generating a package information table at the time of starting;
an operational information obtaining section for obtaining information regarding the package regularly and generating an operational information table at the time of operating network elements;
a change information detecting section for detecting change information by comparing the package information table and the operational information table; and
a package operation setting performing section for performing operation setting on the package on the basis of the change information.

2. The package control unit according to claim 1, wherein the package operation setting performing section performs at least one of the setting of the activation control and the setting of the supervisory control of the package as the operation setting.

3. The package control unit according to claim 1, further comprising a link information table storing section for storing a link information table regarding links which connect the network elements.

4. The package control unit according to claim 3, wherein the package operation setting performing section automatically performs line setting on all of network elements relating to paths which will influence the package on the basis of the link information table.

5. The package control unit according to claim 1, further comprising a package mounting state judging section for judging whether the package is mounted normally or erroneously and informing of the judgment thereof.

6. The package control unit according to claim 1, wherein the package operation setting performing section chooses whether to perform the operation setting or not.

7. A package control method for controlling a package mounted in a network element, comprising the steps of:
obtaining information regarding the package and generating a package information table at the time of starting;
obtaining information regarding the package regularly and generating an operational information table at the time of operating the network element;
detecting change information by comparing the package information table and the operational information table; and
performing operation setting on the package on the basis of the change information.

8. The package control method according to claim 7, wherein at least one of the setting of the activation control and the setting of the supervisory control of the package is performed as the operation setting.

9. The package control method according to claim 7, further comprising the step of storing a link information table regarding links which connect the network elements.

10. The package control method according to claim 9, wherein line setting is automatically performed on all of network elements relating to paths which will influence the package on the basis of the link information table.

11. The package control method according to claim 7, further comprising the step of judging whether the package is mounted normally or erroneously and informing of a judgment.

12. The package control method according to claim 7, wherein whether to perform the operation setting or not is chosen.
